# EUROPEAN PATENT APPLICATION

(11) **EP 4 826 511 A1**
(43) Date of publication of application: **21.10.2026**
(21) Application number: 26168040.9
(22) Date of filing: 26.03.2026
(51) Int. Cl.: G06F 3/12, G06F 9/4401

(54) **INFORMATION PROCESSING APPARATUS, CONTROL METHOD FOR INFORMATION PROCESSING APPARATUS, AND CLOUD PRINTING SYSTEM**

(30) Priority: 15.04.2025 JP 2025067038
(71) Applicant: Canon Kabushiki Kaisha, Tokyo 146-8501 (JP)
(72) Inventor: NAKAGAWA, Masashi, Tokyo (JP)
(74) Representative: WESER & Kollegen Patentanwälte PartmbB

(57) **Abstract**

An information processing apparatus having a communication unit is provided. The information processing apparatus downloads, from a cloud printing server connected by the communication unit, a virtual printer that uploads a print job received from a printer driver to the cloud printing server, and installing the virtual printer, installs a generic printer driver for the virtual printer, and generates a print queue associated with the generic printer driver.

## Description

### TECHNICAL FIELD

The technology of the present disclosure relates to an information processing apparatus, a control method for an information processing apparatus, and a cloud printing system.

### BACKGROUND

Generic printer drivers (local printer drivers) that communicate directly with image forming apparatuses using industry-standard protocols such as the Internet Printing Protocol (IPP) have begun to spread in recent years. A local printer driver can communicate with printers from a plurality of printer vendors. Accordingly, by using a local printer driver, a user can send a print job to an image forming apparatus without installing a vendor-specific printer driver.

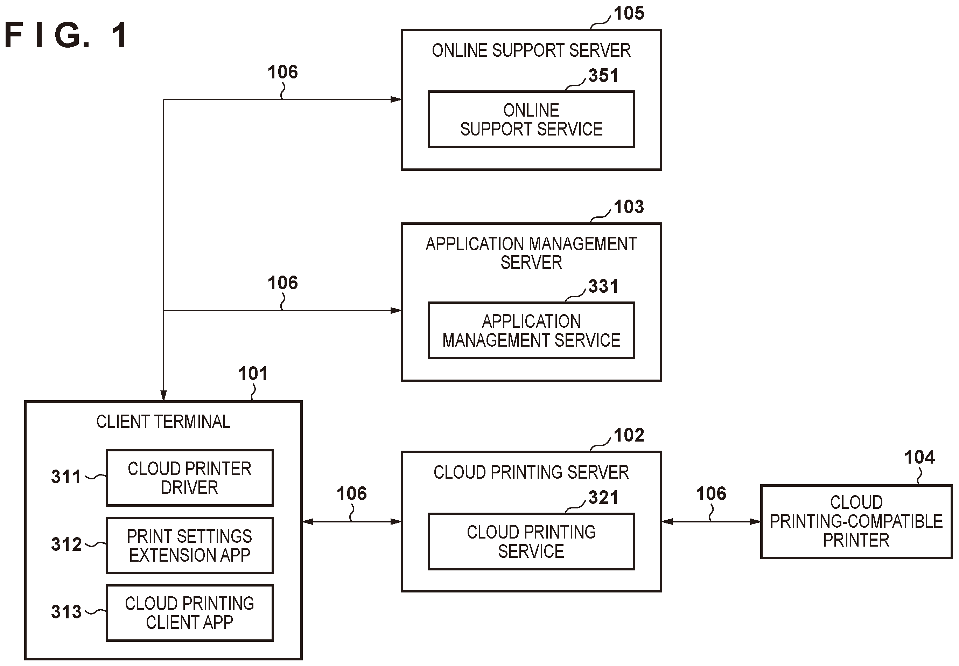

Printing using a cloud printing service is also being considered. In a cloud printing service, a printer driver for the cloud printing service (a cloud printer driver) is installed in an information processing apparatus. In the cloud printing service, printing is executed by having the information processing apparatus send a print job to the cloud printing service using the cloud printer driver, after which the cloud printing service sends the print job to an image forming apparatus (Fig. 1).

Because the local printer driver, the cloud printer driver, and the like described above handle print jobs printed by image forming apparatuses from a variety of vendors, there are restrictions on the items, functions, and the like that can be set in print settings. It is therefore conceivable to extend a print queue associated with a printer driver using identification information of a printer associated with the printer driver, as disclosed in Japanese Patent Laid-Open No. 2023-141093. Doing so makes it possible to implement a vendor-specific print settings UI, a print job editing function, and the like.

### SUMMARY

The identification information used in Japanese Patent Laid-Open No. 2023-141093, which identifies the model, type, or the like of the image forming apparatus, is set for each image forming apparatus. However, when a print job is submitted to the image forming apparatus via the cloud printing service, the cloud printing service does not have identification information that identifies the image forming apparatus. Accordingly, the information processing apparatus cannot generate a print queue using a generic printer driver that uses an industry-standard protocol such as IPP. Furthermore, the print queue is generally generated using an OS-standard printer driver as the generic printer driver, and thus the generic printer driver cannot be installed automatically from an installer provided by the printer vendor.

In other words, when a user submits a print job to the cloud printing service, it is necessary to install an OS-standard generic printer driver in addition to the installer provided by the vendor, which increases the workload. In an environment that does not use the cloud printing service, the user can automatically install the printer driver by simply downloading an installer prepared by the vendor to the information processing apparatus. Accordingly, a user who has moved to an environment in which printing is performed via a cloud printing service will be unaware that it is necessary to install an additional generic printer driver. If a generic printer driver is not installed in the information processing apparatus, a print queue corresponding to the cloud printing service will also not be generated, and printing via the cloud printing service cannot be performed.

A technique of the present disclosure automatically installs a generic printer driver from a vendor installer and generates a print queue corresponding to a cloud printing service.

The present disclosure in its first aspect provides an information processing apparatus as specified in claim 1. Optional features are specified in claim 2 to 10.

The present disclosure in its second aspect provides a cloud printing system as specified in claim 11.

The present disclosure in its third aspect provides a control method as specified in claim 12.

According to the foregoing configuration, it is possible to automatically install a generic printer driver from a vendor installer and generate a print queue corresponding to a cloud printing service.

Features of the present disclosure will be apparent from the following description of embodiments with reference to the attached drawings. The following description of embodiments is given by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a diagram illustrating a system configuration.
Fig. 2A is a diagram illustrating the hardware configuration of a client terminal.
Fig. 2B is a diagram illustrating the hardware configuration of a cloud printing server.
Fig. 2C is a diagram illustrating the hardware configuration of an application management server.
Fig. 2D is a diagram illustrating the hardware configuration of a cloud printing-compatible printer.
Fig. 2E is a diagram illustrating the hardware configuration of an online support server.
Fig. 3A is a diagram illustrating the software configuration of the client terminal.
Fig. 3B is a diagram illustrating the software configuration of the cloud printing server.
Fig. 3C is a diagram illustrating the software configuration of the application management server.
Fig. 3D is a diagram illustrating the software configuration of a cloud printing-compatible printer.
Fig. 3E is a diagram illustrating the software configuration of the online support server.
Fig. 4 is a diagram illustrating an example of a sequence performed among software and services related to print settings extension app registration.
Fig. 5A is a diagram illustrating an example of an extension setup information file.
Fig. 5B is a diagram illustrating an example of device information.
Fig. 6 is a diagram illustrating an example of a sequence performed among software and services related to printer registration with a cloud printing service according to a first embodiment.
Fig. 7 is a flowchart illustrating the generation of a client app installer package according to the first embodiment.
Fig. 8 is a diagram illustrating an example of a UI in a client app installer generation screen according to the first embodiment.
Figs. 9A and 9B show a diagram illustrating an example of a sequence performed among software and services related to printer driver addition according to the first embodiment.
Fig. 10 is a diagram illustrating an example of a sequence performed among software and services related to launching a print settings extension app according to the first embodiment.
Fig. 11A is a diagram illustrating an example of a print settings extension app UI.
Fig. 11B is a diagram illustrating an example of a print settings extension app UI.
Fig. 12 is a diagram illustrating an example of a sequence related to printing from a printer driver according to the first embodiment.
Fig. 13 is a diagram illustrating an example of a sequence performed among software and services related to printer driver addition according to a second embodiment.
Fig. 14 is a diagram illustrating an example of a printer driver installation UI provided by an OS according to the second embodiment.
Fig. 15 is a diagram illustrating an example of a sequence performed among software and services related to printer driver addition according to a third embodiment.
Fig. 16 is a diagram illustrating an example of a help information screen for installing an OS-standard printer driver according to the third embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

Fig. 1 is a schematic diagram illustrating a cloud printing system according to the present embodiment. A client terminal 101, a cloud printing server 102, an application management server 103, a cloud printing-compatible printer 104, and an online support server 105 are connected over a network 106. Although one each of the client terminal 101 and the cloud printing-compatible printer 104 are illustrated in Fig. 1, a plurality of each of the client terminal 101 and the cloud printing-compatible printer 104 may be provided. Additionally, the cloud printing server 102, the application management server 103, and the online support server 105 may be server systems constituted by a plurality of information processing apparatuses. Implementing each server as a server system constituted by a plurality of information processing apparatuses makes it possible to distribute the load among the plurality of information processing apparatuses. The cloud printing server 102, the application management server 103, and the online support server 105 may also be implemented virtually within a single physical information processing apparatus.

The network 106 is a communication network and is assumed to be a WAN such as the Internet, but may be a closed environment such as an internal LAN. The configuration may also include both a WAN and a LAN.

The client terminal 101 is an information processing apparatus such as a PC, a tablet, a smartphone, or the like, and is a terminal that is directly operated by a user. Any desired application software can be run on the client terminal 101.

The cloud printing-compatible printer 104 is a device that actually prints on a recording medium such as paper, and is an image forming apparatus that converts print data received from the cloud printing server 102 over the network 106 into image data and prints the data. The cloud printing-compatible printer 104 receives print data, generated by a cloud printer driver 311 of the client terminal 101, through the cloud printing server 102.

The cloud printing server 102 accepts print instructions and document data from the exterior. The cloud printing server 102 converts the document data received from the client terminal 101 into print data through a cloud printing service 321 running on the server, and sends the print data to a predetermined cloud printing-compatible printer 104. The "predetermined cloud printing-compatible printer 104" may be a cloud printing-compatible printer already registered with the cloud printing server 102. The cloud printing server 102 is a server apparatus that provides a cloud printing client app 313.

The application management server 103 holds and manages various types of applications. The application management server 103 receives application identification information and a download request from the client terminal 101 through an application management service 331 running on the server. The server then sends an application identified based on the received identification information to the client terminal 101.

The online support server 105 is a server apparatus that provides an online support service 351. The online support service 351 is a service for providing the client terminal 101 with a file containing information for extending the functions of the client terminal 101. Although the cloud printing service 321, the application management service 331, and the online support service 351 are referred to as "services", these are all server programs that provide the corresponding services.

### Hardware

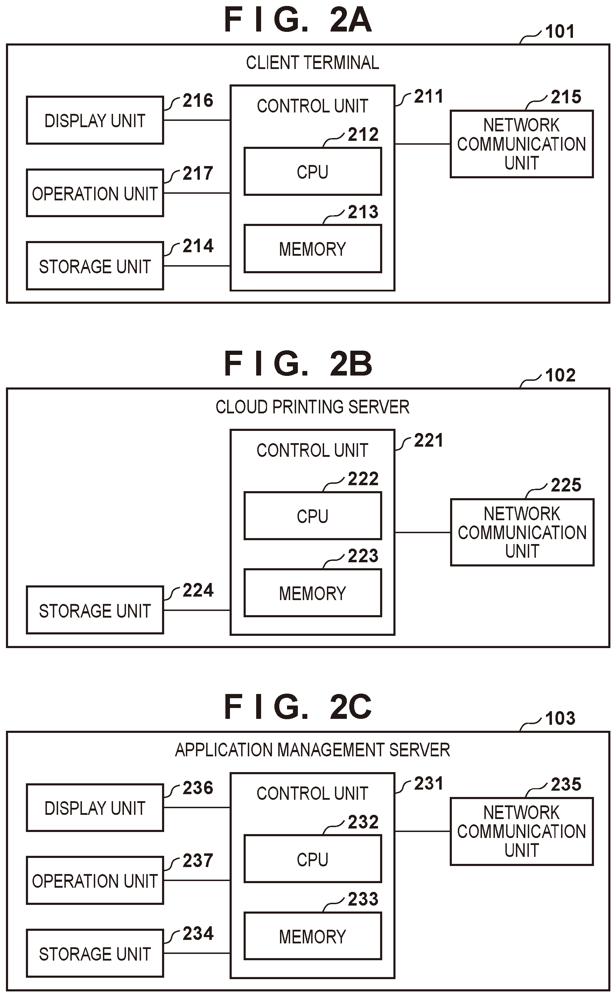

The hardware configuration of the system according to the present embodiment will be described next with reference to Figs. 2A to 2E. Fig. 2A is a block diagram illustrating the hardware configuration of the client terminal 101. The client terminal 101 includes a display unit 216, an operation unit 217, a storage unit 214, a control unit 211, and a network communication unit 215.

The storage unit 214 is a non-volatile storage device such as a hard disk, an SSD, or the like, and is capable of storing and rewriting digital data.

The control unit 211 is constituted by a CPU 212 and a memory 213, and controls the operations of the client terminal 101 as a whole. The CPU 212 loads programs stored in the storage unit 214 into the memory 213 and executes the programs. The memory 213 is a main storage memory of the CPU 212, and is used as a work area or a temporary storage region for loading various types of programs.

The network communication unit 215 is a communication interface for communicating with the external network 106, and inputs and outputs digital data to and from external servers, client terminals, and the like over the network 106.

The display unit 216 is a device for displaying visual information to a user in real time, such as a liquid crystal display. The operation unit 217 is a device for accepting inputs from a user through a keyboard, a mouse, or the like. A device that includes the functions of both the display unit 216 and the operation unit 217, such as a touch panel, may be used instead.

Fig. 2B is a block diagram illustrating the hardware configuration of the cloud printing server 102. The cloud printing server 102 includes a storage unit 224, a control unit 221, and a network communication unit 225. The storage unit 224, the control unit 221, and the network communication unit 225 correspond to the storage unit 214, the control unit 211, and the network communication unit 215, respectively, of the client terminal 101, and will therefore not be described here. Although the cloud printing server 102 will be described as being constituted by a single information processing apparatus having the hardware configuration illustrated in Fig. 2B, the cloud printing server 102 may be constituted by a plurality of the information processing apparatuses having the configuration illustrated in Fig. 2B.

Fig. 2C is a block diagram illustrating the hardware configuration of the application management server 103. The application management server 103 includes a display unit 236, an operation unit 237, a storage unit 234, a control unit 231, and a network communication unit 235.

The display unit 236, the operation unit 237, the storage unit 234, the control unit 231, and the network communication unit 235 correspond to the display unit 216, the operation unit 217, the storage unit 214, the control unit 211, and the network communication unit 215, respectively, of the client terminal 101, and will therefore not be described here. Although the application management server 103 will be described as being constituted by a single information processing apparatus having the hardware configuration illustrated in Fig. 2C, the application management server 103 may be constituted by a plurality of the information processing apparatuses.

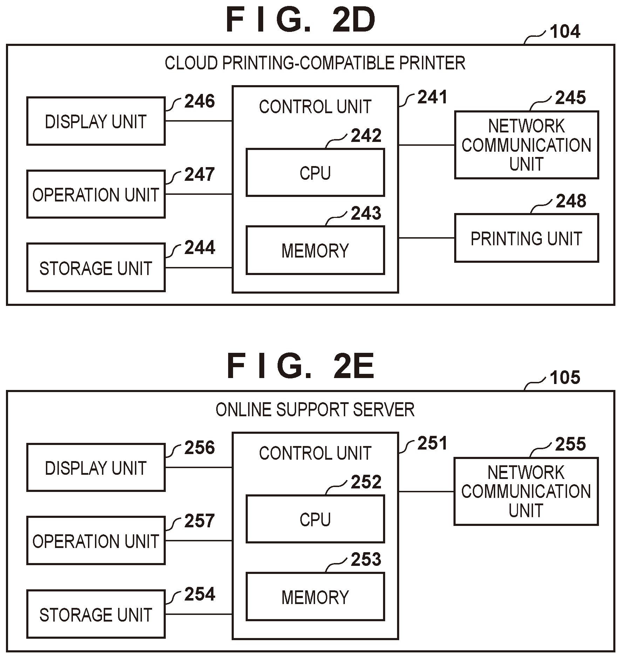

Fig. 2D is a block diagram illustrating the hardware configuration of the cloud printing-compatible printer 104. The cloud printing-compatible printer 104 includes a display unit 246, an operation unit 247, a storage unit 244, a control unit 241, a network communication unit 245, and a printing unit 248.

The display unit 246 is a device for displaying information to a user in real time, such as a touch panel or an LED provided in the cloud printing-compatible printer 104.

The operation unit 247 is a device for accepting input from a user, and may include physical keys such as a numerical keypad in addition to a touch panel. The storage unit 244 and the control unit 241 correspond to the storage unit 214 and the control unit 211, respectively, of the client terminal 101, and will therefore not be described here.

The network communication unit 245 is a communication interface for communicating with the external network 106, and is mainly responsible for receiving print data, sending notifications about the state of the cloud printing-compatible printer 104, such as errors, to external servers, and the like.

The printing unit 248 is a device that performs printing processing by performing a series of operations of feeding, printing, and discharging sheets prepared in a cassette or a tray. The printing method is not particularly limited, and may be an electrophotographic method, an ink jet method, or the like. The printing unit 248 also includes a double-sided unit used when discharging sheets, a finishing device that performs stapling or punching processing, and the like.

Although a single-function printer having only a printing function is described as an example of the cloud printing-compatible printer 104 in the present embodiment, a multifunction printer (multifunction peripheral) which also has a scanner function, a fax function, and the like may be used instead.

Fig. 2E is a hardware block diagram illustrating the online support server 105 in detail. Although described as being constituted by a single information processing apparatus in the present embodiment, the online support server 105 may be constituted by a plurality of information processing apparatuses. The online support server is constituted by a display unit 256, an operation unit 257, a storage unit 254, a control unit 251, and a network communication unit 255. The display unit 256 and the operation unit 257 are the same as the display unit 216 and the operation unit 217 of the client terminal 101, respectively, and will therefore not be described. The storage unit 254 is a memory device such as an HDD or an SSD. A file containing information for extending the functions provided by the client terminal 101 (also called an "extension information file") is stored in the storage unit 254.

The control unit 251 is constituted by a CPU 252 and a memory 253. The CPU 252 controls the online support server 105 as a whole. The memory 253 stores programs, data, and the like, and is used in processing executed by the CPU 252. The network communication unit 255 is a communication interface for the online support server 105 to communicate with the client terminal 101. The online support server 105 receives an obtainment request for the extension information file stored in the storage unit 254 through the network communication unit 255, and sends the extension information file corresponding to the obtainment request to the client terminal 101.

### Software

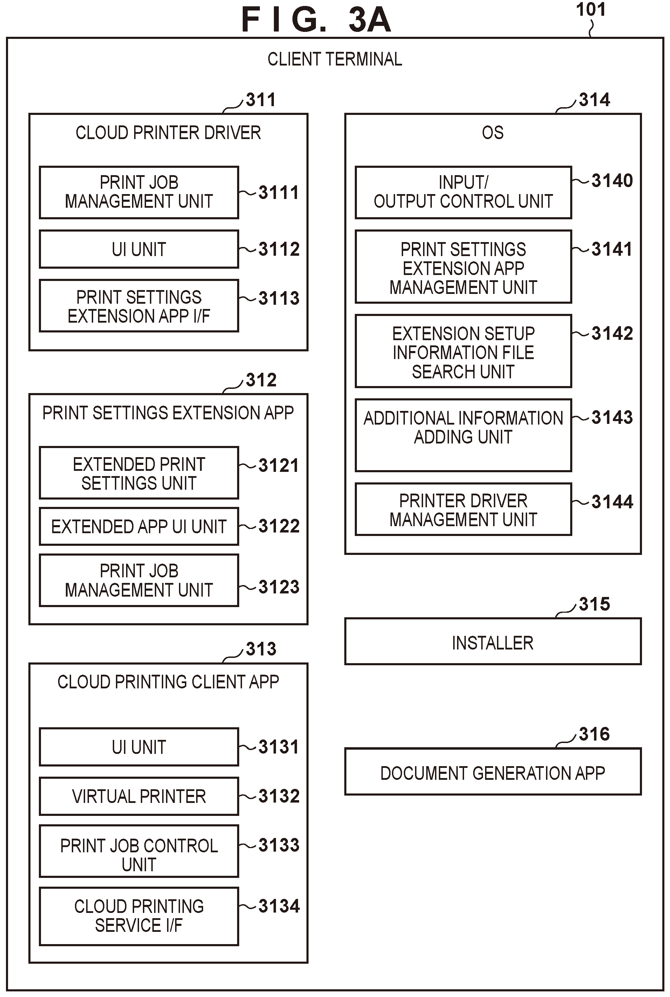

The software configuration of the system according to the present embodiment will be described next with reference to Figs. 3A to 3E. Fig. 3A is a block diagram illustrating the software configuration of the client terminal 101.

The client terminal 101 has the cloud printer driver 311, a print settings extension app 312, the cloud printing client app 313, an operating system (OS) 314, and an installer 315. The installer 315 is downloaded from the cloud printing service 321 and deployed. Note that "print settings extension app" is an abbreviation of "print settings extension application", and "cloud printing client app" is an abbreviation of "cloud printing client application".

The cloud printer driver 311 includes a print job management unit 3111, a UI unit 3112, and a print settings extension app I/F 3113. The cloud printer driver 311 is an OS-standard generic printer driver, and is therefore no different from a local printer driver. However, obtaining information from the cloud printing client app 313 (described hereinafter) results in the configuration of the cloud printer driver 311. The cloud printer driver 311 generates a print job in response to a print instruction from application data, such as document data, generated by the client terminal 101. The generated print job is then sent to the print settings extension app 312.

The print job management unit 3111 performs processing such as generating print jobs, sending print jobs, and the like. The UI unit 3112 is responsible for displaying a print settings screen prepared by the cloud printer driver 311, accepting user operations from the client terminal 101, and the like. The print settings extension app I/F 3113 processes the exchange of data, commands, and the like with the print settings extension app 312.

The print settings extension app 312 includes an extended print settings unit 3121, an extended app UI unit 3122, and a print job management unit 3123. The print settings extension app 312 is an application for accepting print settings corresponding to printer vendor-specific functions not supported by the cloud printer driver 311 (extended print settings) and applying those settings to a print job. The print settings extension app 312 sends that print job to the cloud printing client app 313.

The extended print settings unit 3121 manages printer vendor-specific function settings not supported by the cloud printer driver 311 or the local printer driver. The extended app UI unit 3122 is responsible for displaying a print settings screen prepared by the print settings extension app 312, accepting user operations from the client terminal 101, and the like. The print job management unit 3123 performs processing such as generating print jobs, editing print jobs generated by the cloud printer driver 311, sending print jobs, and the like.

The cloud printing client app 313 is an application having a UI unit 3131, a virtual printer 3132, a print job control unit 3133, and a cloud printing service I/F 3134. The cloud printing client app 313 causes a virtual printer to function when installing the cloud printer driver 311, and also performs processing such as uploading print jobs to the cloud printing service 321. The cloud printing client app 313 is downloaded from the cloud printing server 102 and installed in the client terminal 101.

The UI unit 3131 displays an authentication screen for accessing the cloud printing server 102 and the like. The virtual printer 3132 starts itself as a printer in order to install an OS-standard generic printer driver, so as to be found in a printer search performed by the OS 314. The print job control unit 3133 receives a print job from the cloud printer driver 311 and sends the print job to the cloud printing service 321 to be connected to. The cloud printing service I/F 3134 processes the exchange of data, commands, and the like with the cloud printing service 321. The cloud printing service I/F 3134 sends print data to the cloud printing service 321, receives printer information from the cloud printing service 321, and the like.

The OS 314 includes an input/output control unit 3140, a print settings extension app management unit 3141, an extension setup information file search unit 3142, an additional information adding unit 3143, and a printer driver management unit 3144. The OS 314 has a function for setting an environment compliant with the cloud printing system in the client terminal 101, such as installing software compliant with the cloud printing system, particularly with respect to the present embodiment. The print settings extension app management unit 3141, the extension setup information file search unit 3142, the additional information adding unit 3143, and the like, which are modules for this purpose, may be additionally-installed software modules.

The input/output control unit 3140 accepts operations by the user of the client terminal 101.

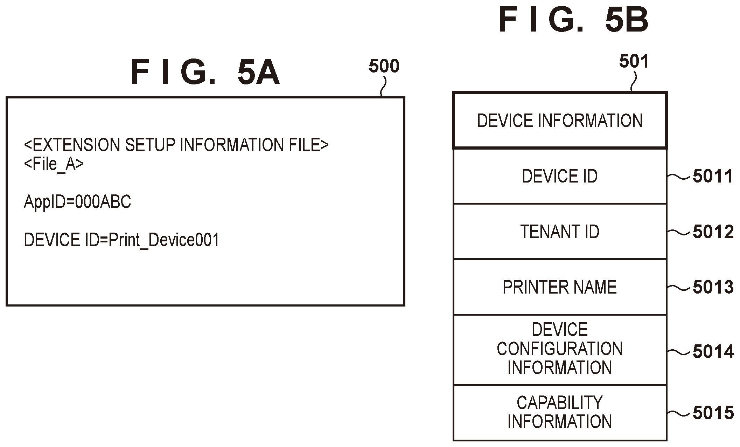

The print settings extension app management unit 3141 manages the installation of the print settings extension app 312, processes the exchange of data and commands, and the like. The print settings extension app management unit 3141 also searches the print settings extension app 312 from the application management service 331 using an application ID (AppID) extracted from the extension setup information file (Fig. 5A).

The extension setup information file search unit 3142 searches for an extension setup information file having a device ID (device identification information) that matches a device ID held by the OS 314 as a search key from the online support service 351. The extension setup information file search unit 3142 then downloads the extension setup information file discovered through the search.

The additional information adding unit 3143 adds first additional information representing a general classification of the application to the device ID. In the present embodiment, the general classification of the application is a classification of the type of the application corresponding to the connected device, and if the application corresponds to a printer, additional information "Print_" is added to the device ID. Note that "Print_" is merely an example, and other text strings, numbers, or symbols may be used instead.

In the present embodiment, the printer driver management unit 3144 installs and uninstalls OS-standard printer drivers included in the OS 314.

The installer 315 is downloaded from the cloud printing service 321, deployed, and stored in the storage unit 214 of the client terminal 101. The installer 315 installs the cloud printing client app 313 and the cloud printer driver 311 downloaded at the same time.

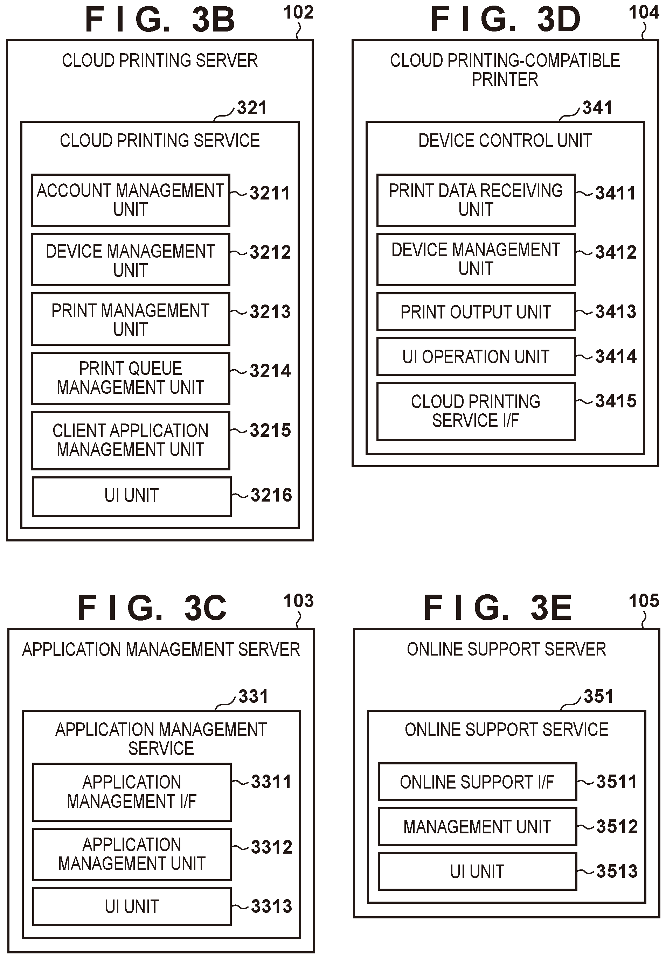

Fig. 3B is a block diagram illustrating the software configuration of the cloud printing server 102. The cloud printing server 102 includes the cloud printing service 321. The cloud printing service 321 includes an account management unit 3211, a device management unit 3212, a print management unit 3213, a print queue management unit 3214, and a client application management unit 3215. The cloud printing server 102, for example, accepts the registration of terminals, printers, or the like, saves print jobs uploaded from terminals, and downloads a print job list, a print job, or the like in response to a request from a printer.

The account management unit 3211 manages the authentication of tenants and users registered with the cloud printing service 321.

The device management unit 3212 manages device information for printers registered with the cloud printing service 321. The device ID, a tenant ID, a printer name, device configuration information, capability information, and the like can be given as examples of the device information.

The print management unit 3213 determines whether to allow a print job transfer request from the cloud printing-compatible printer 104, manages the transfer of print jobs, and the like.

The print queue management unit 3214 receives a print job from the outside and holds the received print job in a region prepared in the storage unit 224 of the cloud printing server 102.

The client application management unit 3215 generates and manages the cloud printing client app 313 installed in the client terminal 101. The client application management unit 3215 holds the modules of the virtual printer 3132 and the print job control unit 3133 downloaded to the storage unit 214 of the client terminal, as well as the installer 315 that loads and installs those modules.

Fig. 3C is a block diagram illustrating the software configuration of the application management server 103. The application management server 103 includes the application management service 331. The application management service 331 further includes an application management I/F 3311, an application management unit 3312, and a UI unit 3313. The application management service 331 stores and manages applications such as the print settings extension app, and downloads the application in response to a request from a terminal such as the client terminal 101.

The application management I/F 3311 processes the exchange of data, commands, and the like between the client terminal 101 and the OS 314.

The application management unit 3312 manages applications registered in the application management service 331. The application management unit 3312 also issues application IDs when applications are registered in the application management service 331.

The UI unit 3313 is responsible for displaying a UI prepared by the application management service 331, accepting user operations in the application management server 103, and the like.

Fig. 3D is a block diagram illustrating the software configuration of a device control unit 341 of the cloud printing-compatible printer 104. The device control unit 341 further includes a print data receiving unit 3411, a device management unit 3412, a print output unit 3413, a UI operation unit 3414, and a cloud printing service I/F 3415.

The print data receiving unit 3411 accepts print data sent from the outside over the network 106 and stores the data in the storage unit 244 of the cloud printing-compatible printer 104.

The device management unit 3412 manages optional devices connected to the cloud printing-compatible printer 104, capability information, the amount of paper remaining, the amount of ink/toner remaining, and the like.

The print output unit 3413 controls processing for printing onto a recording medium such as paper.

The UI operation unit 3414 displays a UI in the operation unit 247 of the cloud printing-compatible printer 104, obtains instructions and information input via the UI, and the like.

The cloud printing service I/F 3415 processes the exchange of data, commands, and the like with the cloud printing service 321.

Fig. 3E is a block diagram illustrating the software configuration of the online support server 105. The online support server 105 has the online support service 351. The online support service 351 has an online support I/F 3511, a management unit 3512, and a UI unit 3513.

The online support I/F 3511 processes the exchange of data, commands, and the like between the client terminal 101 and the OS 314. The online support I/F 3511 also receives a search request for a file to extend the functions of the client terminal 101 from the client terminal 101, sends a response to the search request to the client terminal 101, and the like.

The management unit 3512 manages extension setup information files registered in the online support service 351. The extension setup information file is a file containing information for extending the functions of the client terminal 101. For example, the printer ID of the cloud printing-compatible printer 104 of the client terminal 101 and the application identification information of the print settings extension app 312 for extending the cloud printer driver 311 are stored.

The UI unit 3313 is responsible for displaying a UI prepared by the online support service 351, accepting user operations in the online support server 105, and the like.

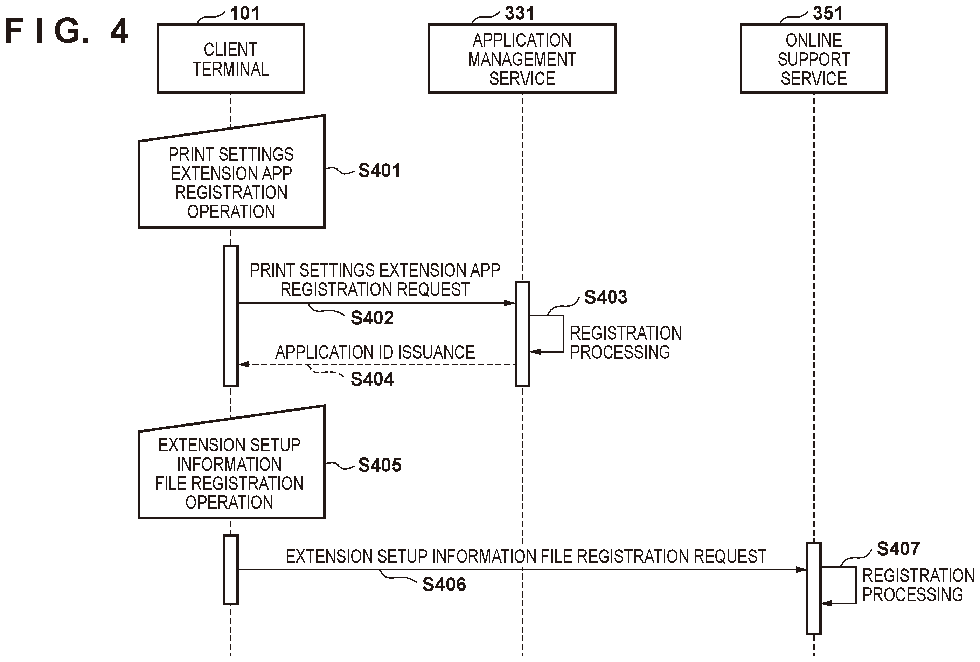

An example of procedures performed by a print settings extension app registrar, a user, and the like, as well as a sequence performed among the software and the printing service, according to the present embodiment, will be described next with reference to Figs. 4, 5A, 5B, 6, 7, 8, 9, 10, 11A, 11B, and 12.

### Registering Print Settings Extension App and Extension Setup Information File (Fig. 4)

First, an example of processing for registering the print settings extension app 312 in the application management service 331 and registering the extension setup information file with the online support service 351 will be described hereinafter with reference to Fig. 4. The descriptions here assume that the application registrar uploads the application from an information processing apparatus to the application management server 103. The information processing apparatus is assumed to be the client terminal 101, but may be a different information processing apparatus instead. The operations performed by the client terminal 101 illustrated in Fig. 4 are implemented by the CPU 212 executing programs loaded into the memory. By executing programs loaded into respective memories, a CPU 232 of the application management server 103 implements the application management service 331, and the CPU 252 of the online support server 105 implements the online support service 351.

Here, a case where the print settings extension app 312, which extends the print settings of the cloud printer driver 311 pre-installed in the client terminal 101, is uploaded to the application management service 331 will be described as an example.

First, in step s401, an input/output control unit 4140 of the client terminal 101 accepts, from a user, an operation for registering the print settings extension app by the print settings extension app registrar. The registrar may be an administrator having registration permissions, for example.

Next, in step s402, the print settings extension app management unit 3141 of the client terminal 101 sends a registration request for the print settings extension app 312 for extending the print settings of the cloud printer driver 311 to the application management service 331. The registration request may include a program file of the print settings extension app 312 that is to be registered.

Next, in step s403, the application management unit 3312 of the application management service 331 registers the print settings extension app 312 in the storage unit 234, and generates the application ID, which is the identification information of the registered print settings extension app 312.

In step s404, the application management I/F 3311 of the application management service 331 sends the generated application ID to the information processing apparatus that sent the application registration request, i.e., the client terminal 101.

In step s405, the input/output control unit 4140 of the client terminal 101 accepts an operation for registering the extension setup information file generated by the print settings extension app registrar. The print settings extension app registrar generates an extension setup information file containing the application ID received in step s405. The extension setup information file contains the received application ID and the device ID of a printer for which print settings can be made using that application, i.e., the print settings extension app 312. The device ID is a text string in which additional identification information is added to the device ID held by the device. The device ID included in the extension setup information file will be called an "extended device ID" to be distinguished from the device ID held by the device. If a plurality of printers for which print settings can be made using the print settings extension app 312 are present, a text string in which the additional identification information of the printer is added to the device ID may be included for all of the printers. Note that the device ID may be the device ID of a printer, known to the registrar in advance, for which print settings can be made using the print settings extension app 312.

Fig. 5A illustrates an example of an extension setup information file 500 in which an extended device ID is written, taking into account that additional identification information is added to the device ID of a printer for cloud printing in additional identification information addition processing. In this example, the application ID (AppID) of the print settings extension app 312 for cloud printing is "000ABC". The extended device ID is "Print_Device001", in which the additional identification information "Print_" is added before the device ID.

In step s406, the print settings extension app management unit 3141 of the client terminal 101 sends a registration request for the extension setup information file 500 to the online support service 351.

In step s407, the online support I/F 3511 of the online support service 351 receives the extension setup information file 500 and registers the extension setup information file 500 received by the management unit 3512.

Through this, the print settings extension app 312 is registered in the application management service 331. Furthermore, the extension setup information file 500 for extending the cloud printer driver 311 using the registered print settings extension app 312 is registered in the online support service 351.

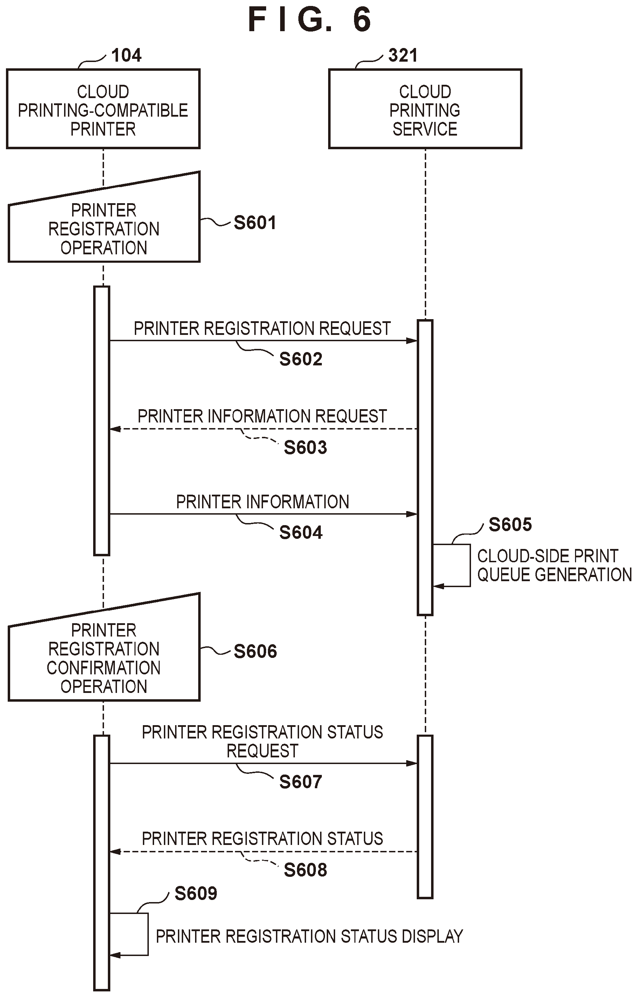

### Registering Cloud Printing-Compatible Printer (Fig. 6)

A procedure performed by the user when registering the cloud printing-compatible printer 104 with the cloud printing service 321 will be described next with reference to Fig. 6. The operations performed by the cloud printing-compatible printer 104 illustrated in Fig. 6 are realized by a CPU 242 executing programs loaded into the memory. The cloud printing service 321 is realized by a CPU 222 of the cloud printing server 102 executing programs loaded into the memory.

First, in step s601, the cloud printing-compatible printer 104 accepts a printer registration operation for registering the cloud printing-compatible printer 104 with the cloud printing service 321 from the user through the UI operation unit 3414.

Next, in step s602, the cloud printing service I/F 3415 of the cloud printing-compatible printer 104 sends a printer registration request along with the device ID of the printer to the cloud printing service 321. Here, the device ID sent to the cloud printing service 321 is, for example, hardware identification information (HWID) assigned to each printer model. Note that the device ID may be any information as long as it is information by which the printer model can be identified.

Upon receiving the registration request, the cloud printing service 321 sends a URL of the cloud printing service 321 for printer registration to the cloud printing-compatible printer 104. The user accesses the URL from the cloud printing-compatible printer 104 or the information processing apparatus, enters a user ID and password for using the cloud printing service 321, and logs in to the cloud printing service 321. When the user has successfully logged in, in step s603, the device management unit 3212 of the cloud printing service 321 sends an obtainment request for printer information required to register the printer to the cloud printing-compatible printer 104.

In step s604, the cloud printing service I/F 3415 of the cloud printing-compatible printer 104 sends the printer information to the cloud printing service 321 in response to the request.

Next, the device management unit 3212 of the cloud printing service 321 that received the printer registration request in s605 registers the printer information of the cloud printing-compatible printer 104 and generates a print queue for the cloud printing-compatible printer 104. When s605 is complete, device information 501 illustrated in Fig. 5B is registered in the cloud printing service 321.

Fig. 5B is an example of the device information registered in the cloud printing service 321, but the device information is not limited thereto. The device information 501 in the present embodiment is constituted by a device ID 5011, a tenant ID 5012, a printer name 5013, device configuration information 5014, and capability information 5015. The device ID 5011 is a text string in which additional identification information is added to the device ID obtained from the cloud printing-compatible printer 104, and is the extended device ID. The tenant ID 5012 is identification information that identifies the tenant to which users who can use the cloud printing-compatible printer identified by the device information belong. A "tenant" is a group constituted by one or more users. The tenant is the unit by which users are managed in the cloud printing service, and users, client terminals, cloud printing-compatible printers, and the like are managed on a tenant-by-tenant basis. The printer name 5013 is the name of the printer that sent the registration request. The printer name 5013 is obtained from the cloud printing-compatible printer 104 based on step s601 in Fig. 6 or the obtainment request from the cloud printing service 321, and is used for the name of the print queue. Note that the printer name may be set through a different method.

The device configuration information 5014 is information indicating the hardware configuration of the cloud printing-compatible printer 104. The "hardware configuration" is information indicating whether a double-sided printing unit is attached to the cloud printing-compatible printer 104, whether a finisher capable of stapling is attached, whether a finisher capable of punching is attached, and the like. The device configuration information 5014 is obtained using an obtainment request for the capability information sent from the cloud printing service 321 to the cloud printing-compatible printer 104. The capability information 5015 is information indicating capabilities of the cloud printing-compatible printer 104. The capability information 5015 is information indicating the functions that the cloud printing-compatible printer 104 is capable of executing, such as whether color printing is possible, whether double-sided printing is possible, whether a toner saving mode can be used, and the like. The capability information 5015 is also obtained by the cloud printing service 321 sending an obtainment request for the capability information to the cloud printing-compatible printer 104.

Next, in step s606, the UI operation unit 3414 of the cloud printing-compatible printer 104 accepts a printer registration confirmation operation from the user via the UI operation unit 3414. Next, in step s607, the cloud printing service I/F 3415 of the cloud printing-compatible printer 104 sends a printer registration status request to the cloud printing service 321.

Next, in step s608, the device management unit 3212 of the cloud printing service 321 returns a printer registration status to the cloud printing-compatible printer 104. Then, in step s609, the UI operation unit 3414 of the cloud printing-compatible printer 104 displays the received printer registration status. Note that the processing indicated in steps s606 to s609 is a method for the user to confirm whether the information of the cloud printing-compatible printer 104 has been registered with the cloud printing service 321, and therefore does not necessarily have to be performed.

The cloud printing-compatible printer 104 can be registered with the cloud printing service 321 through the sequence described above. The cloud printing-compatible printer 104 registered with the cloud printing service 321 can obtain a print job from the cloud printing service 321 and print the print job.

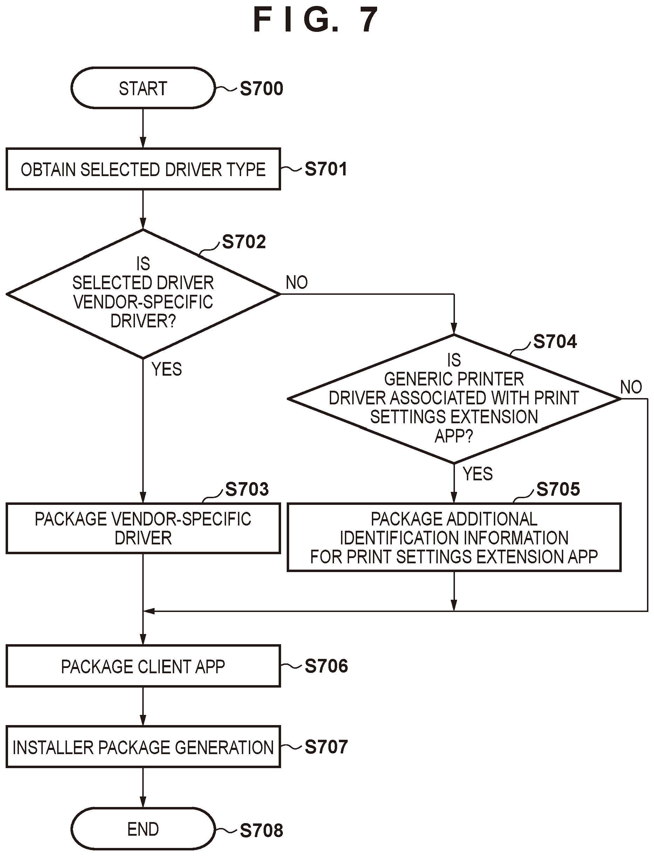

### Installer Package Generation Processing (Fig. 7)

A sequence for generating an installer package for the installer 315, i.e., the cloud printing client app, according to the present embodiment, will be described next with reference to Fig. 7. Note that this generation sequence starts upon a generation request for the installer 315 made to the client application management unit 3215 being accepted as a result of a user operation made in a UI unit 3216 of the cloud printing service 321. The processing of Fig. 7 is realized by the CPU 222 of the cloud printing server 102 executing programs loaded into the memory.

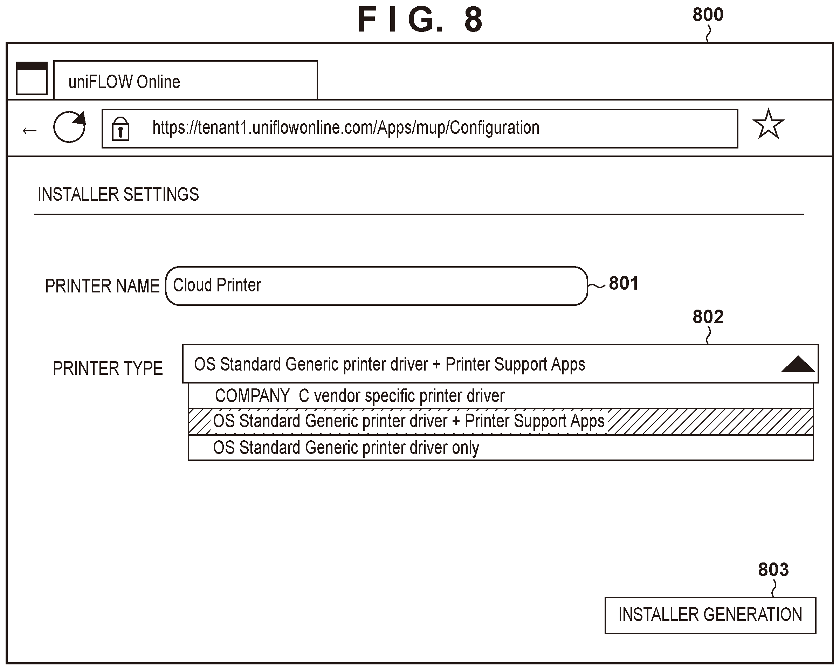

Fig. 8 is an example of a generation screen 800 for the client app installer 315, and is displayed in the UI unit 3216 of the cloud printing service 321. Although the UI unit 3216 may include a physical display unit and operation unit, the UI unit 3216 may be a remote UI provided by a client terminal connected to the web. The generation screen 800 includes an item 801 for setting the printer name to be installed and an item 802 for setting the type of the printer driver ("printer type", in the drawing). The processing starts when the user sets each of these items and then presses a generate button 803 for the installer 315. In the example in Fig. 8, the printer selected is a printer corresponding to a combination of an OS-standard generic printer driver, i.e., provided in the installed OS, as the printer driver type 802, and the cloud printing client app 313.

When the processing is started in step s700, in step s701, the client application management unit 3215 obtains the type of the driver selected by the user through the printer driver type item 802. In step s702, the client application management unit 3215 determines the type of the selected printer driver. If the type of the selected printer driver is a vendor-specific driver, the sequence branches to step s703. If the type of the selected printer driver is not a vendor-specific driver, the sequence branches to step s704. The determination as to whether the printer driver is a vendor-specific driver may be made based on, for example, the name of the selected printer driver or the additional information. Specifically, when "Company C vendor specific printer driver" is selected through the settings item 802 in Fig. 8, the driver is determined to be a vendor-specific driver.

In step s703, the client application management unit 3215 packages the selected vendor-specific driver in the installer 315. "Packaging" may mean that the selected driver file is included in the installer 315 including an installer and the driver to be installed.

In step s704, the client application management unit 3215 determines whether the type of the selected printer driver is a generic printer driver associated with the print settings extension app 312. The sequence branches to step s705 if such is the case, and to step s706 if not.

If the type of the selected printer driver is a generic printer driver associated with the print settings extension app 312, in step s705, the client application management unit 3215 packages the additional identification information for the print settings extension app in the installer package. In the example in Fig. 8, when "OS Standard Generic printer driver + Print Support Apps" is selected through the settings item 802, the printer driver is determined to be a general-purpose printer driver associated with the print settings extension app. When "OS Standard Generic printer driver only" is selected through the settings item 802 in Fig. 8, in step s704, it is determined that the generic printer driver associated with the print settings extension app 312 is not selected. In this case, no driver-related modules are packaged with the installer 315. In other words, when "OS Standard Generic printer driver only" is selected, the client application management unit 3215 generates the installer package without the printer driver.

After determining the modules to be packaged for each selected driver, in step s706, the client application management unit 3215 further packages the cloud printing client app in the installer. In step s707, the client application management unit 3215 generates the installer package of the installer 315, i.e., the printer driver.

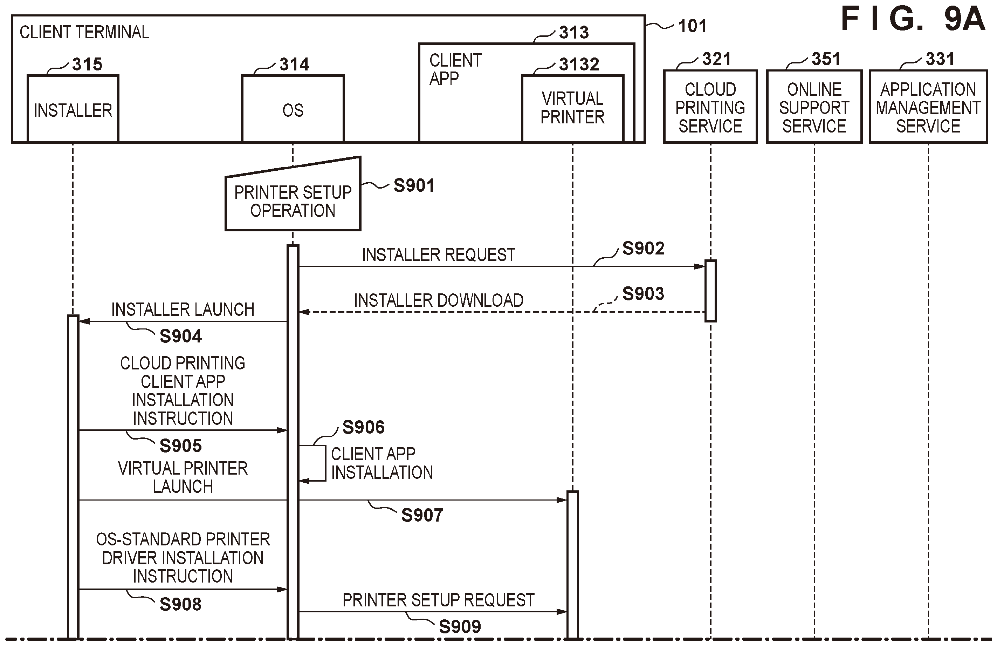

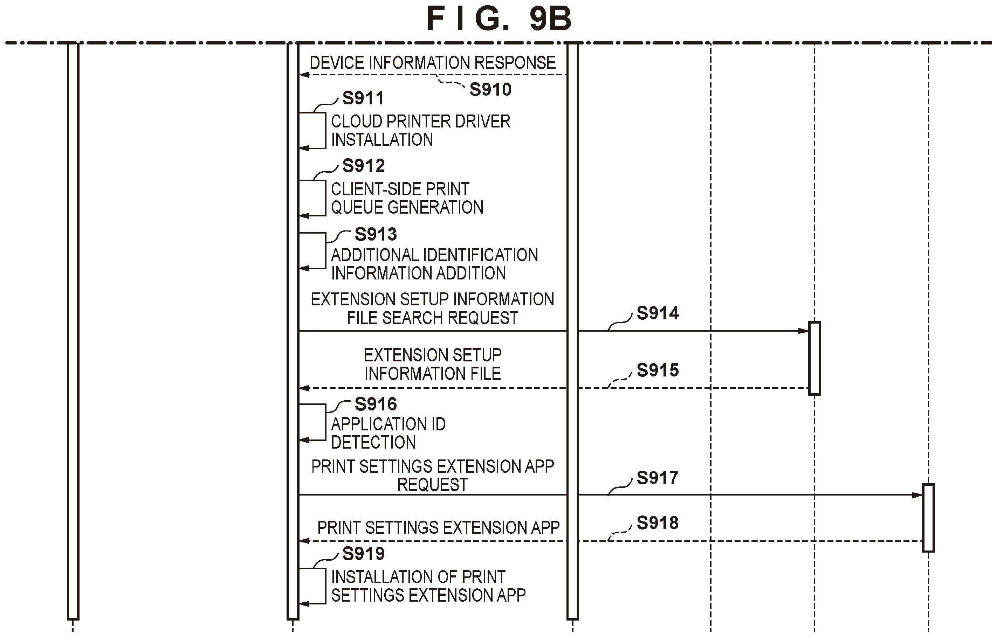

### Processing for Installing Print Settings Extension App (Figs. 9A and 9B)

An example of the installation of the print settings extension app 312 when the user has performed setup operations for the cloud printing-compatible printer 104 in the client terminal 101 will be described next with reference to Figs. 9A and 9B. Unless otherwise specified, this processing is performed mainly by the client app installer 315. Note that client app installer 315 is also referred to simply as the "installer 315". In Figs. 9A and 9B, the processing performed by the client terminal 101 is implemented by the CPU 212 executing programs loaded into the memory. Processing by other services is implemented by the CPU of the server executing that service executing programs loaded into the memory.

In step s901, the OS 314 of the client terminal 101 accepts a cloud printing printer setup operation made by the user through the input/output control unit 3140. The following descriptions assume a method in which the installer 315 is downloaded through a web browser provided by the cloud printing service 321 and the installer 315, but the method is not limited thereto.

Having accepted the setup operation in step s902, the OS 314 requests the installer 315 from the cloud printing service 321. In step s903, the cloud printing service 321 that has received the request sends, to the request source, the installer package including the installer 315 generated in advance according to the method described with reference to Figs. 7 and 8. Having received the installer package, in step s904, the OS 314 launches the installer 315. Having received a launch command, in step s905, the installer 315 instructs the OS 314 to install the cloud printing client app 313 packaged in the installer package. Having received the installation instruction, in step s906, the OS 314 loads the cloud printing client app 313 into the memory 213, and launches the cloud printing client app 313. In addition, in step s907, the installer 315 launches the virtual printer 3132, which is a function of the cloud printing client app 313. Upon launch, the virtual printer 3132 can behave as a printer only in the client terminal 101, and can be discovered through printer searches such as mDNS. Furthermore, the virtual printer 3132 also supports printing using the IPP protocol, which makes it possible to install an OS-standard IPP class driver for that printer.

In step s908, after confirming that the virtual printer 3132 has been launched, the installer 315 instructs the OS 314 to install the OS-standard printer driver for the virtual printer 3132. Having received the installation instruction from the installer 315, in step s909, the OS 314 sends a printer setup request to the virtual printer 3132. The printer setup request includes a request to obtain device information such as the capability information and the device ID of the virtual printer 3132 defined in the cloud printing service 321.

In response to the printer setup request, in step s910, the virtual printer 3132 sends the device information such as the device ID and the capability information to the OS 314.

In step s911, the OS 314 installs the cloud printer driver 311 in response to accepting the cloud printing printer setup operation from the user. However, in the present embodiment, the printer driver for the cloud is assumed to be an OS-standard printer driver, and thus this processing may be unnecessary. The installation of the cloud printer driver 311 may be started in response to the printer setup operation, or may be started in response to the device information such as the device ID being obtained in step s910.

In step s912, the OS 314 generates a print queue associated with the installed cloud printer driver 311 in the client terminal 101.

In step s913, the OS 314 performs processing for adding the additional identification information to the device ID received in step s910. The additional identification information may be any text string different from the normal device ID. As such, in the present embodiment, the OS 314 adds the additional identification information ("Print_"), indicating that the application corresponds to the printer, to the device ID in order to distinguish the application from the applications of other devices. In a subsequent step, the online support service 351 searches for an extension setup information file including the device ID to which the additional identification information has been added. Based on this, the additional identification information added here is the same as the additional identification information used in the extension setup information file 500. Note that "Print_" is merely an example, and other text strings, numbers, or symbols may be used instead. As a result, if the device ID of the virtual printer 3132 is "device001", the device ID after the additional identification information addition processing is "Print_device001".

In step s914, through the extension setup information file search unit 3142, the OS 314 requests the online support service 351 to search for an extension setup information file including the target device ID. Here, the OS 314 sends the text string of the device ID, to which the additional identification information has been added in step s913, to the online support service 351 as the device ID.

In step s915, if an extension setup information file including the target device ID is held, the online support service 351 returns the extension setup information file (Fig. 5A) to the OS 314. In the present embodiment, the device ID sent in step s914 is "Print_Device001". Accordingly, if the extension setup information file 500 is registered in the online support service 351 through the sequence illustrated in Fig. 4, the search is successful, and the extension setup information file 500 is sent to the OS 314.

In step s916, the OS 314 detects the application ID from the obtained extension setup information file. The application ID of the print settings extension app 312 for cloud printing is detected by executing step s916.

In step s917, using the detected application ID, the OS 314 requests the application management service 331 for the application to which that application ID has been added.

In step s918, the application management service 331 returns the print settings extension app 312 matching the requested application ID.

In step s919, the OS 314 installs the obtained print settings extension app 312 in association with the client-side print queue. In step s919, the print queue generated in step s912 is associated with the application ID of the print settings extension application. As a result, the corresponding print settings extension app 312 can be launched when the print queue generated in step s912 is called.

Note that the foregoing has described searching for printer information of the printer of the virtual printer 3132. However, both printers connected over the network 106 and printers registered with the cloud printing service 321 may be searched for in response to a search instruction received by the client terminal 101.

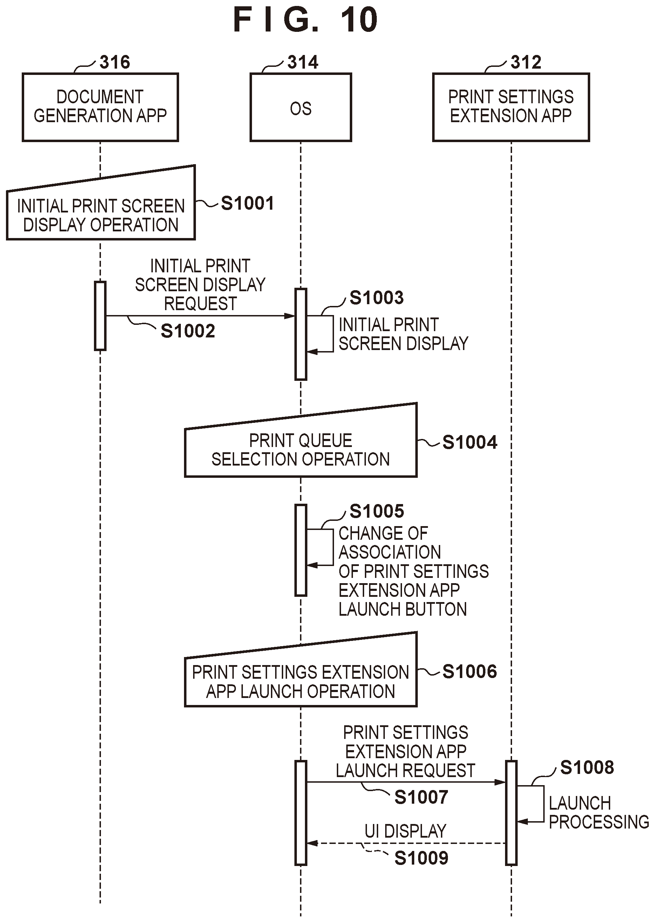

### Launching Print Settings Extension App (Fig. 10)

An example of a sequence of processing performed when launching the print settings extension app 312 and making print settings according to the present embodiment will be described next with reference to Fig. 10. As an example, Fig. 10 illustrates processing performed when a user generates document data using a typical application such as Word or Excel and instructs the print settings to be changed in that application. The document generation app 316, the OS 314, and the print settings extension app 312 illustrated in Fig. 10 are all realized by the CPU 212 of the client terminal 101 executing programs loaded into the memory.

First, in step s1001, the application accepts an initial print screen display operation made by the user. Having accepted the initial print screen display operation, in step s1002, the application requests the OS 314 to display an initial print settings screen.

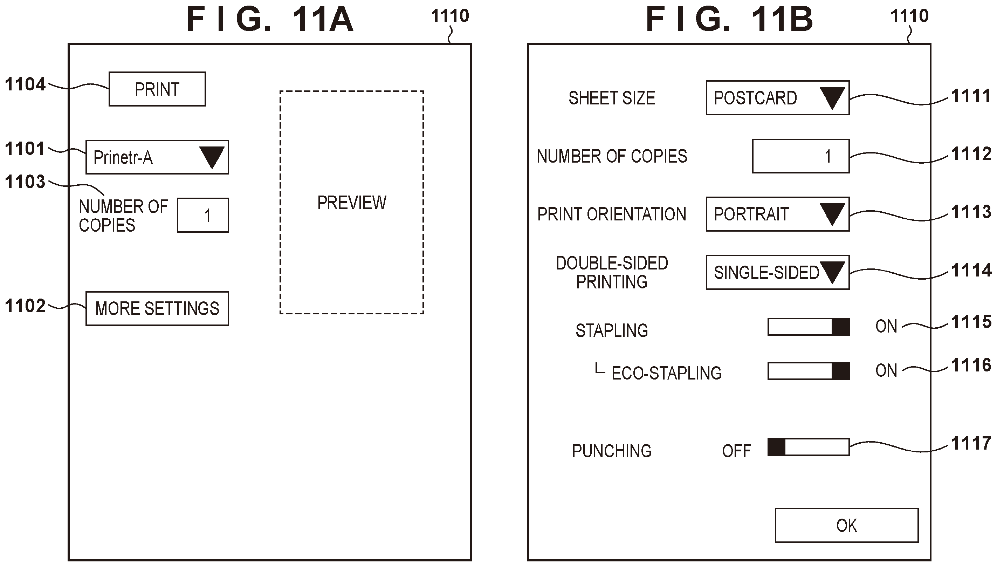

In step s1003, the OS 314 displays a print settings screen for selecting the print queue (Fig. 11A) as the initial print settings screen. Fig. 11A is an example of the initial print settings screen displayed by the OS 314, and some print settings information, such as a copy number setting part 1103, can be displayed depending on the type of document generation app 316 that is used. A region 1101 is a region for selecting the print queue to be used for printing. When the user selects the region 1101, the print queues registered in the client terminal 101 are displayed in a list. A list of the print queues installed in the client terminal 101 is displayed in the print queue list. This list includes print queues of printers registered with the cloud printing service 321. An object 1102 is an object for launching the print settings extension app 312. An object 1104 is a print execution button that the user touches to execute the print.

Next, in step s1004, the OS 314 accepts a user print queue (Fig. 11A; 1101) selection operation via the input/output control unit 3140. When a print queue is selected, in step s1005, the OS 314 sets the app identification information of the print settings extension app 312 associated with the selected print queue as the information of the print settings extension app 312 associated with the object 1102. Doing so makes it possible to launch the print settings extension app 312 corresponding to the set print queue when the object 1102 is selected. In this example, the association of the launch button is changed to the print settings extension app 312 for cloud printing, associated with the print queue of the cloud printer driver 311.

Next, in step s1006, the OS 314 accepts a print settings extension app launch operation from the user through the input/output control unit 3140. In step s1006, an operation for launching the print settings extension app 312 is performed by the user selecting the object 1102.

In step s1007, the OS 314 sends a launch request to the print settings extension app 312 associated with the object 1102, along with parameters such as the print settings information and the printer name of the selected print queue.

In step s1008, the print settings extension app 312 for cloud printing generates a print settings screen extended in accordance with the functions of the printer as launch processing (an extended print settings screen). Fig. 11B illustrates an example of the extended print settings screen according to the present embodiment. In the present embodiment, an extended print settings screen 1110 includes general setting items such as sheet size 1111, number of copies 1112, print orientation 1113, double-sided printing 1114, stapling 1115, and punching 1117. In addition to these, the extended print settings screen 1110 serves as a UI that enables vendor-specific print settings such as eco-stapling 1116 to be performed as well. In step s1009, the OS 314 displays the UI of the print settings extension app 312 for cloud printing (the extended print settings screen 1110) as a new print settings screen through the input/output control unit 3140.

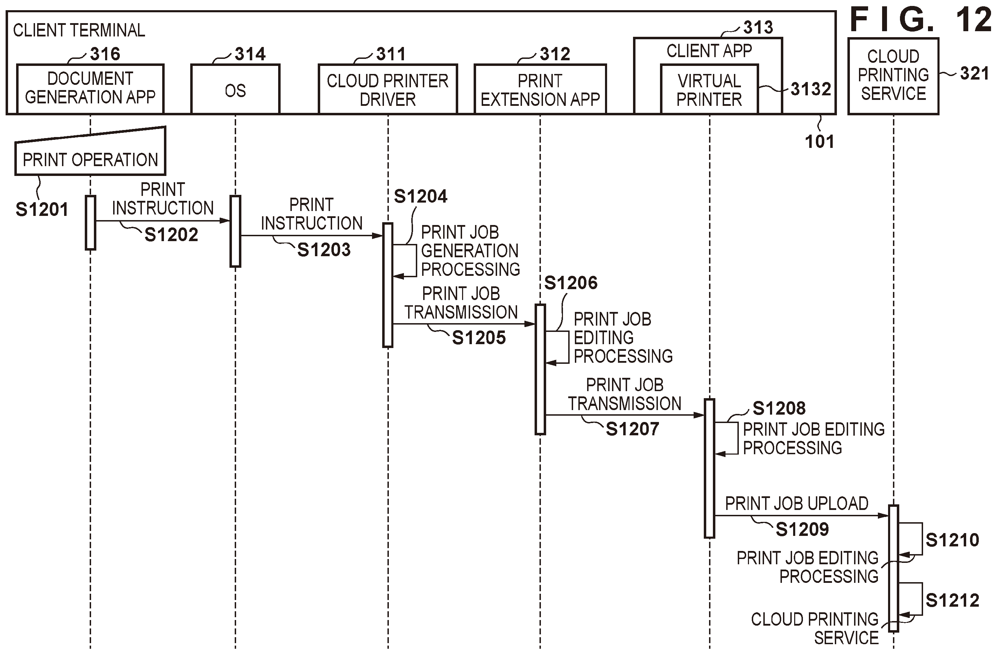

### Printing Processing (Fig. 12)

An example of a sequence of processing pertaining to printing from a printer driver according to the present embodiment will be described next with reference to Fig. 12. As an example, Fig. 12 illustrates processing performed when a user instructs printing by clicking an object for executing printing in a typical application such as Word or Excel. The processing by the client terminal 101 and the cloud printing service 321 illustrated in Fig. 12 is realized by the corresponding CPU executing programs loaded into the memory.

First, in step s1201, the document generation app 316 accepts a print operation from the user. Specifically, this means accepting that the print button object 1104 included in the print settings screen 1110 illustrated in Fig. 11A has been clicked.

Having accepted the print operation, in step s1202, the application instructs the OS 314 to execute the printing. Having accepted the instruction to execute the printing, in step s1203, the OS 314 instructs the cloud printer driver 311 to execute the printing. Having accepted the instruction to execute the printing, in step s1204, the cloud printer driver 311 converts a document object and generates a print job. For example, in the case of an IPP class driver, the print setting items set in the extended print settings screen 1110 (Fig. 11B) in Fig. 10 are converted into print attributes compliant with the IPP protocol, and the document data is converted into PDF file format. However, the present embodiment is not limited thereto. Incidentally, PDF is an acronym of "Portable Document Format", and is increasingly becoming a common format for print jobs interpreted by image forming apparatuses.

Furthermore, in step s1205, the cloud printer driver 311 sends the generated print job to the print settings extension app 312. in step s1206, the print job management unit 3123 of the print settings extension app 312 that received the print job edits the print attributes, the print job, and the like as necessary. For example, because the cloud printer driver 311 is an OS-standard generic driver, the vendor-specific print items set in the print settings extension app 312 in Fig. 10 cannot be processed. Accordingly, the print settings extension app 312 accepts the print job at the timing of step s1205, and edits the print job in accordance with the vendor-specific print items. Furthermore, in step s1207, the print settings extension app 312 sends the edited print job to the virtual printer 3132 of the cloud printing client app 313.

In step s1208, the virtual printer 3132 that received the print job edits the print attributes, the print job, and the like as necessary. For example, it is also possible to communicate with the cloud printing service 321 in advance and encrypt the print job to increase security. Furthermore, in step s1209, the virtual printer 3132 uploads the edited print job to the cloud printing service 321. Although the IPP communication protocol is described as the method (protocol) for uploading the print job to the cloud printing service 321 in the present embodiment, the method is not limited thereto.

In step s1210, the print queue management unit 3214 of the cloud printing service 321 edits the received print job as necessary. Furthermore, in step s1211, the print queue management unit 3214 of the cloud printing service 321 saves the edited print job until a print instruction from the cloud printing-compatible printer 104 is accepted.

As described above, according to the cloud printing system of the present embodiment, when launching the vendor-specific installer 315 and installing a printer driver, a virtual printer is installed first. The virtual printer can be accessed from within the client terminal, but not from outside the terminal. Installing the virtual printer makes it possible to install an OS-standard printer driver for that purpose. In this manner, an OS-standard printer driver can be installed simply by launching the vendor-specific installer 315. The print settings extension app 312 is associated with the OS-standard printer driver, and the print settings extension app is also installed along with the printer driver. This enables the print settings provided by the print settings extension app in addition to the print settings that can be made through the OS-standard printer driver. Furthermore, a print job sent to the virtual printer by the OS-standard printer driver can be uploaded to the cloud printing service by the virtual printer.

### Second Embodiment

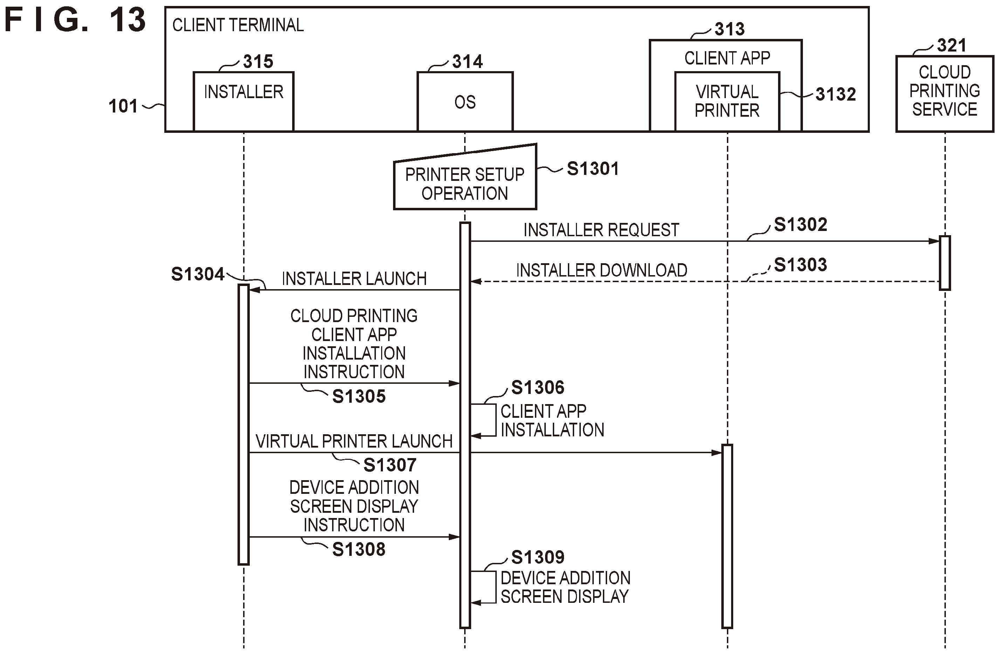

The first embodiment described a method in which the installer 315 automatically installs an OS-standard printer driver. However, this method is conditional on the OS providing means for the vendor-specific installer 315 to install the OS-standard printer driver, and therefore cannot be implemented when such means are not provided. In view of this issue, the present embodiment will describe, with reference to Fig. 13, a method for guiding a user to be able to install an OS-standard printer driver even when means for installing the OS-standard printer driver are not provided.

Fig. 13 is a diagram illustrating an example of a sequence performed among software and services related to printer driver addition. Unless otherwise specified, this processing is performed mainly by the client app installer 315. The processing by the client terminal 101 and the cloud printing service 321 illustrated in Fig. 13 is realized by the corresponding CPU executing programs loaded into the memory. Steps s1301 to s1307 are the same as the processes of steps s901 to s907 illustrated in Fig. 9A and described in the first embodiment, and will therefore not be described here.

In step s1308, after confirming that the virtual printer 3132 has been launched, the installer 315 instructs the OS 314 to display a printer and scanner device addition screen 1400. In the device addition screen 1400, the user can perform an operation for installing an OS-standard printer driver for the virtual printer.

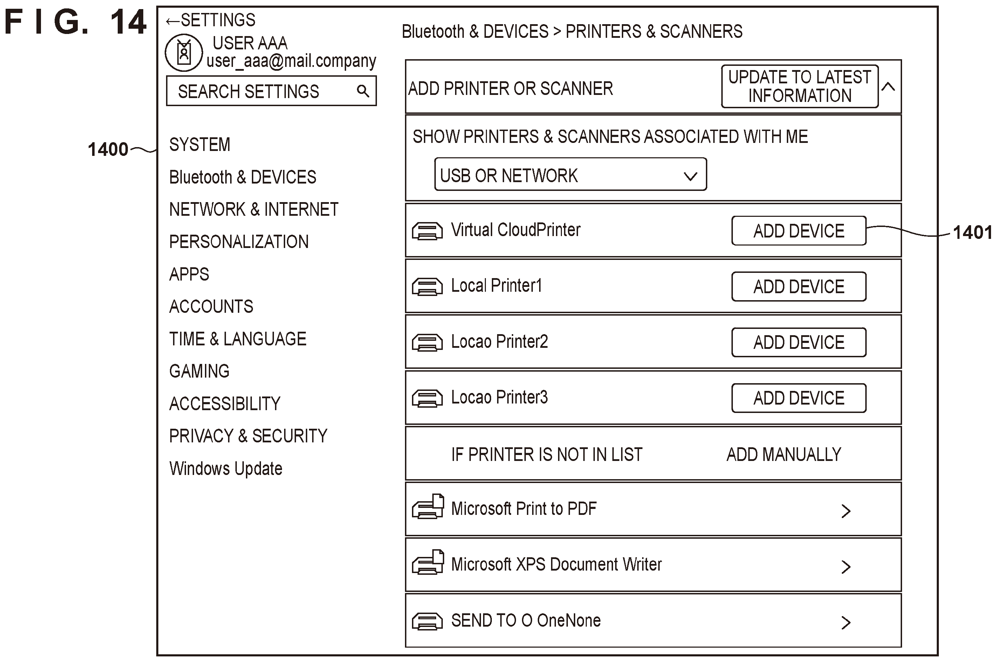

By launching (displaying) the settings screen 1400, in step s1309, the OS 314 performs a device search, finds the virtual printer 3132 launched in step s1307 as a result of the device search, and displays the virtual printer 3132 in the printer list. The selected printer driver is installed automatically simply by the user clicking an add button object 1401 for the device corresponding to that item. "Virtual Cloud Printer" included in the printer list in the screen 1400 illustrated in Fig. 14 is the virtual printer 3132, and the printer driver for outputting a print job to the virtual printer 3132 is installed in response to that selection. Steps s909 and later in Fig. 9A are executed in response to the add button object 1401 for the device corresponding to that item being pressed, and a print queue is generated in which the selected driver, which in this example is the cloud printer driver, is installed and output to the virtual printer 3132. Furthermore, the print settings extension app 312 for cloud printing can also be associated as a mechanism of the OS 314. This processing is standard processing by the OS 314 and will therefore not be described here.

According to the present embodiment, in a system that sends print jobs via a cloud printing service, launching the vendor-specific installer 315 makes it possible to guide a user to the OS-standard printer driver installation screen. As a result, the user can install a device simply by clicking an "add" button for the device. According to the present embodiment, the cloud printer driver 311 can be installed in response to an operation made by the user, even if the vendor-specific installer 315 does not have a function for installing the cloud printer driver 311.

### Third Embodiment

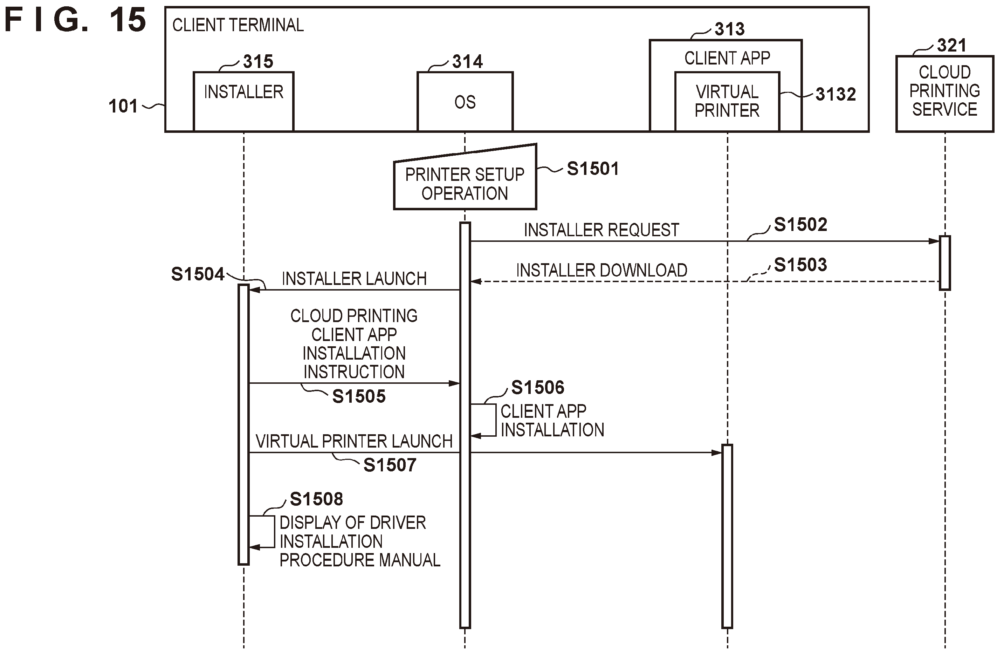

The second embodiment described a method in which the installer 315 causes the OS to display a printer driver addition screen so that the user can easily install a driver. However, this method does not strictly indicate what the user is to do next. Even if the driver addition screen is actually displayed, it is possible that the printer driver for cloud printing cannot be added through that screen. In view of this issue, the present embodiment will describe, with reference to Fig. 15, a method for displaying help information for guiding a user to be able to install an OS-standard driver. Fig. 15 is a diagram illustrating an example of a sequence performed among software and services related to printer driver addition. The entities that execute the processing for the respective devices are the same as those illustrated in Fig. 14. Unless otherwise specified, this processing is performed mainly by the client app installer 315. Steps s1501 to s1507 are the same as the processes of steps s901 to s907 illustrated in Fig. 9A and described in the first embodiment, and will therefore not be described here.

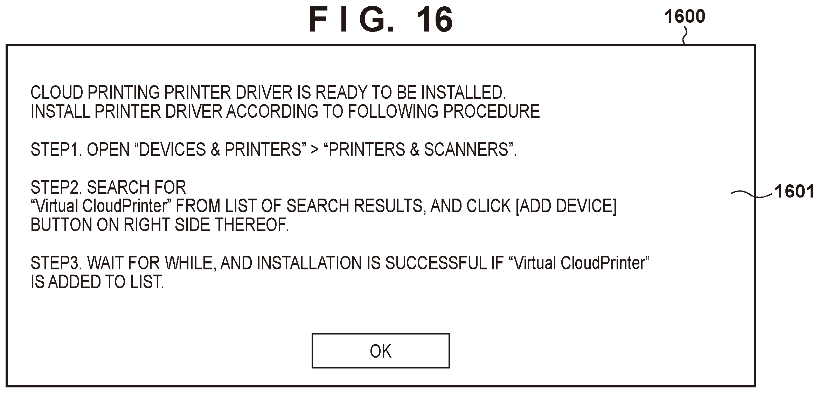

In step s1508, after confirming that the virtual printer 3132 has been launched, the installer 315 displays help information so that the user can install the OS-standard printer driver themselves. Fig. 16 is an example of a dialog-based help display (help screen) 1600, but the display may be web-based instead. The help display 1600 displays a description 1601 of an operation procedure to be performed by the user for installing the cloud printer driver 311 in accordance with the details described in the second embodiment.

When the user views the help display 1600 and selects, for example, an OK button, the processing from s1308 in Fig. 13 and described in the second embodiment can be executed. Accordingly, the cloud printer driver 311 can be selected from the screen 1400, and the installation thereof can be instructed.

According to the present embodiment, in a system that sends print jobs via a cloud printing service, displaying the help information can guide a user to be able to install an OS-standard printer driver.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (101) comprising:
communication means (215) ; and
control means (211), wherein the control means (211)
downloads, from a cloud printing server (102) connected by the communication unit, a virtual printer (3132) that uploads a print job received from a printer driver to the cloud printing server (102), and installs the virtual printer (3132);
installs a generic printer driver for the virtual printer; and
generates a print queue associated with the generic printer driver.

2. The information processing apparatus (101) according to claim 1,
wherein the control means (211)
obtains device identification information from the virtual printer; and
installs a print settings extension application (312) that is associated with the device identification information and is for extending print settings of the generic printer driver.

3. The information processing apparatus (101) according to claim 1 or 2,
wherein the virtual printer (3132) is not accessible from outside the information processing apparatus (101).

4. The information processing apparatus (101) according to any one of claims 1 to 3,
wherein the control means (211) obtains an installer including the virtual printer (3132) from the cloud printing server (102), and executing the installer to install the virtual printer.

5. The information processing apparatus (101) according to claim 4,
wherein the generic printer driver is installed in accordance with an installation instruction given to an operating system of the information processing apparatus by the installer.

6. The information processing apparatus (101) according to any one of claims 1 to 5,
wherein the control means (211) displays, by a display unit (216), a device addition screen (1400) for adding a printer after the virtual printer is installed, and
the generic printer driver is installed in accordance with an operation performed in the device addition screen and instructing installation of the generic printer driver.

7. The information processing apparatus (101) according to claim 6,
wherein the control means (211) displays, by the display unit (216), a help screen (1600) indicating a procedure for adding a printer, after the virtual printer is installed.

8. The information processing apparatus (101) according to claim 2,
wherein the information processing apparatus (101) is further communicatively connected to an application management server (103), and
the control means (211) obtains the print settings extension application (312) from the application management server (103) and installing the print settings extension application (312).

9. The information processing apparatus (101) according to claim 8,
wherein the information processing apparatus (101) is further communicatively connected to an online support server (105), and
the control means (211)
obtains an extension setup information file associated with the device identification information from the online support server; and
obtains, from the application management server (103), the print settings extension application (312) indicated by application identification information included in the extension setup information file.

10. The information processing apparatus (101) according to claim 2,
wherein the control means
executes the print settings extension application (312) and accepts a print setting;
executes the generic printer driver and generates a print job having the print setting; and
sends the print job to the virtual printer.

11. A cloud printing system comprising:
an information processing apparatus (101);
a cloud printing server (102); and
a printer (104) configured to obtain a print job from the cloud printing server (102) and execute printing,
wherein the information processing apparatus (101) includes:
communication means (215); and
a control means, wherein the control means (211)
downloads, from the cloud printing server (102) connected by the communication unit (215), a virtual printer (3132) that uploads a print job received from a printer driver to the cloud printing server (102), and installs the virtual printer (3132);
installs a generic printer driver for the virtual printer; and
generates a print queue associated with the generic printer driver.

12. A control method for an information processing apparatus (102) including a communication unit (215), the control method comprising:
downloading, from a cloud printing server (102) connected with the information processing apparatus (101) by the communication unit (215), a virtual printer (3132) that uploads a print job received from a printer driver to the cloud printing server (102), and installing the virtual printer (3132);
installing a generic printer driver for the virtual printer; and
generating a print queue associated with the generic printer driver.
